# EUROPÄISCHE PATENTSCHRIFT

(11) **EP 1 454 477 B1**
(45) Veröffentlichungstag und Bekanntmachung des Hinweises auf die Patenterteilung: **23.05.2012**
(21) Anmeldenummer: 02798268.5
(22) Anmeldetag: 12.12.2002
(51) Int. Cl.: H04M 3/533

(54) **VERFAHREN ZUM ZEITGLEICHEN VERTEILEN VON BELIEBIGEN AUDIOINFORMATIONEN**
METHOD FOR THE SIMULTANEOUS DISTRIBUTION OF AUDIO DATA
PROCEDE DE DISTRIBUTION SIMULTANEE DE DONNEES AUDIO

(30) Priorität: 14.12.2001 DE 10161660
(43) Veröffentlichungstag der Anmeldung: 08.09.2004
(73) Patentinhaber: T-Mobile Deutschland GmbH, 53227 Bonn (DE)
(72) Erfinder: KRAMARZ-VON KOHOUT, Gerhard, 53113 Bonn (DE)
(74) Vertreter: Riebling, Peter
(86) Internationale Anmeldenummer: PCT/DE2002/004557
(87) Internationale Veröffentlichungsnummer: WO 2003/053030

(56) Entgegenhaltungen:
- US-A- 4 439 635
- US-A- 4 580 012
- US-A- 5 222 120
- US-A- 5 384 829
- US-A- 6 067 348
- US-A1- 2001 029 176

## Beschreibung

Die Erfindung betrifft ein Verfahren zum zeitgleichen Verteilen einer beliebigen Audioinformation an vorzugsweise mehrere Empfänger in einem Nachrichtennetz.

Es sind Nachrichtenverteilsysteme bekannt, die elektronische Textnachrichten eines Absenders speichern und nach Angaben des Absenders mittels einzeln angegebener Adressatangaben oder nach vorgegebenen Verteilerschlüsseln an einen oder mehrere Empfänger weiterleitet. Solche Systeme sind speziell in der Mobilfunktechnik als SMS (short-message-system) bekannt. Seit einiger Zeit ist es auch möglich, solche Textnachrichten auch mit Telekommunikationsendgeräten zu empfangen, die über keine Anzeigemöglichkeit (Display) verfügen. Es wird dabei der digital vorliegende Text mittels eines Sprachsynthesierungsprozesses in analoge Sprache umgewandelt und dem Empfänger übermittelt. Nachteilig ist bei diesen Systemen, dass die unpersönliche synthetische Stimme keinerlei Rückschluß auf den Absender zuläßt. Nachteilig ist weiterhin, dass nur Sprache oder eine begrenzte Anzahl von Sonderzeichen, jedoch keine Geräusche oder Töne bei diesem System übertragbar sind.

Weiterhin ist bekannt, dass im Internet verschiedene Provider Nachrichtenverteilerdienste anbieten, mit deren Hilfe elektronische Nachrichten der verschiedensten Art als e-mail an einen oder mehrere Empfänger vermittelt werden. Diese elektronischen Nachrichten können aus Text, digitalisierter Sprache, Wave-Dateien, MIDI-Dateien, Bild-Dateien oder ähnlichen bestehen. Nachteilig ist bei diesen Diensten, dass die Empfänger die notwendigen technischen Decodiereinrichtungen besitzen müssen - üblicherweise Computer mit entsprechender Software - um diese e-mails umwandeln zu können um diese danach lesen, hörer oder sehen zu können.

Zum Stand der Technik sei ferner auf die Veröffentlichungen US 5 3B4 829 A, US 5 222 120 A, US 6 067 349 A und US 4 580 012 verwiesen, aus denen Verfahren in verschiedener Ausprägung bekannt sind, die zum zeitgleichen Verteilen einer Audioinformation dienen. Die Audioinformationen werden als sprachnachricht eines Absenders aufgezeichnet und an vorzugsweise mehrere bestimmte Empfänger mit analogen Endeinrichtungen mittels einer Speicher- und Verteileinrichtung übermittelt. Die Speicher- und Verteileinrichtung sendet die digitalisierte Audioinformation nach einer Digital-Analog-Umwandlung als Analogsignal bei Empfangsbereitschaft an die Empfänger.

Eine verarbeitung und Übermittlung von akustischen Ereignissen - anders als Sprache - ist nicht vorgesehen.

Die Aufgabe der Erfindung besteht darin, ein verfahren für ein Nachrichtenspeicher- und -verteilersystem zu schaffen, das analog vorliegende Sprache, Musik oder Geräuschen aufzeichnen und sofort oder zeitversetzt auch an mehrere Empfänger analog und im Originalton ausgeben kann.

Erfingdungsgemäß wird diese Aufgabe durch die kennzeichnenden Merkmale des unabhängigen Patentanspruches gelöst.

Vorteilhafte weiterbildungen sind in den Unteransprüchen gekennzeichnet.

Der Vorteil der Erfindung ist, dass außer übliche Fernsprecheinrichtungen, wie Analog-Telefone, ISDN-Telefone oder Mobil-Telefone auf der Senderseite, insbesondere jedoch auf der Empfängerseite, keinerlei Zusatzgeräte notwendig sind um die Originalsprache oder/und -geräueche zu hören. Das Erkennen des Absenders ist somit bereits aufgrund der Stimmen mit all den emotionalen Nuancen möglich, die bei bestimmten Nachrichten, wie z. B. bei Mitteilungen freudigem oder traurigem Inhalts eine wesentliche Rolle spielen.

Durch die verschiedene Ausgestaltungen der Erfindung besteht weiterhin die Möglichkeit, analog oder bereits digital vorliegende akustische Ereignisse, wie z. B. Kommentare zu politischen Ereignisse, das Wort zum Sonntag, Fußballereignisse mit Ausschnitten aus Live-Reportagen (des entscheidenden Tores), Nachrichten usw. insbesondere auch von professioneller Nachrichtenagenturen individuell an verschiedene Empfänger oder durch Empfängerlisten (Verteilerverzeichnisse) festgelegte Empfängerkreise anstatt wie bisher als e-mail oder SMS nun in akustischer Form zu versenden und durch die Freizügigkeit und derdadurch erzielten Unabhängigkeit von der Technik der Empfangsgeräte eine wesentlich größere Schar von Abonnenten erreichbar zu machen.

Ob für den Empfänger eine akustische Nachricht vorliegt, kann wie in gewohnter Weise bei Mobiltelefonen oder bei entsprechend ausgestatteten Festnetztelefonen durch das Anzeigen z. B. eines Brief-Symbols, ggf. in Verbindung mit einem zusätzlichen, die akustische Nachricht kennzeichnenden Symbol, einem eigenständigen Symbol oder bei Geräten ohne Anzeigemöglichkeit beim Abheben des Hörers durch eine Ansage "Es liegt eine Sprachnachricht für Sie vor" o. ä. Ansagetext signalisiert werden. Auch ist eine Anwahl in bestimmten Zeitintervallen möglich um den Empfänger auch das Vorliegen einer Sprachnachricht aufmerksam zu machen.

Bei beispielsweise bestimmten kommerziellen Anwendung der Erfindung ist es sinnvoll, dass die Nachrichten vorproduziert und erst zu einem späteren, durch den Absender vorgegebenen Zeitpunkt an die Empfänger verteilt werden.

Die Möglichkeit zur zeitversetzte Aussendung der Informationen besteht jedoch generell auch bei nicht kommerziellen Anwendungen um z. B. einen Ausgleich für durch verschiedene Zeitzonen bedingte Zeitverschiebungen zu schaffen.

Es ist auch möglich, auf die Benachrichtigung über das Vorliegen einer akustischen Nachricht ganz zu verzichten und stattdessen die akustische Nachricht den Empfängern durch direkte Anwahl zeitgleich oder zeitversetzt zu übermitteln.

Vorteilhafterweise kann die Steuerung der Speicher- und Verteilereinrichtung mittels eines Sprachservers erfolgen.

Nachfolgend wird die Erfindung anhand zweier Beispiele näher erläutert.

Ein Vereinsvorsitzender möchte allen (telefonisch erreichbaren) Mitgliedern die Nachricht zukommen lassen, dass ein bestimmter Versammlungstermin verschoben wurde. Er wählt die Speicher- und Verteilereinrichtung an, die sich bei diesem Beispiel als Menüpunkt in einer Nachrichtenbox verbirgt. Als Verteilerverzeichnis gibt er über Sprachbefehl "Nachricht an alle Vereinsmitglieder" ein und spricht danach den gewünschten Informationstext auf. Nach Beenden des Textes (durch Auflegen, Sprachbefehl "Ende", Absenden eines Sonderzeichens o. ä.) ist die Eingabeprozedur abgeschlossen. Innerhalb der Speicher- und Verteileinrichtung wird das analoge Sprachsignal digitalisiert und abgespeichert. Nach Beendigung des Textes wird nach der Vorgabe das Verteilerverzeichnis "Vereinsmitglieder" aufgerufen. Je nach Art und Einstellung der Geräte auf der Empfangsseite bzw. Einstellung der Speicher- und Verteileinrichtung werden Benachrichtigungen, dass Sprachnachrichten vorliegen, angezeigt bzw. die Telefone direkt angewählt oder es wird eine Ansage beim erstmaligen Abheben des Hörers des Endgerätes, für das eine Nachricht vorliegt, aufgeschaltet und bei der Nachrichtenabfrage durch die Empfänger (oder Abheben des Hörers bei direkter Anwahl) wird der digital abgespeicherte Text über Digital-Analog-Wandler in der Speicher- und Verteileinrichtung originalgetreu wiedergegeben. Durch die digitale Abspeicherung des Textes ist eine mehrmalige Abfrage oder Erstabfrage auch nach längeren Zeiträumen möglich.

In dem zweiten Beispiel hat ein Teilnehmer als Nachrichtenempfänger über einen Diensteprovider einen Informationsdienst über periodische oder aperiodische Ereignisse gebucht. Tritt ein solches Ereignis auf, dann wird der, dieses Ereignis kommentierende Text mit eventuell zusätzlichen akustischen Informationen, wie z. B. ein Ausschnitt aus einer Live-Reportage eines Fußballspiels, bereits in digitalisierter Form ggf. per Internet an die Speicher- und Verteileinrichtung mit dem entsprechenden Verteilerschlüssel abgesandt. Diese erkennt die Art der Codierung und führt im Bedarfsfall eine Umcodierung in den Code um, im dem diese Einrichtung akustische Ereignis abspeichert. Die eventuelle Benachrichtigung der Empfänger und Weitergabe der akustischen Information erfolgt über einen Digital-Analog-Wandler entsprechend dem ersten Beispiel.

## Patentansprüche

1. Verfahren zum zeitgleichen Verteilen einer beliebigen Audioinformation als Nachricht eines Absenders an mehrere bestimmte Empfänger mit analogen Endeinrichtungen mittels einer Speicher- und Verteileinrichtung eines Nachrichtenverteilsystems, wobei die Speicher- und Verteileinrichtung die digitalisierte Audioinformation nach einer Digital-Analog-Umwandlung als Analogsignal bei Empfangsbereitschaft an die Empfänger sendet, **dadurch gekennzeichnet,**
**dass** die Steuerung der Speicher- und Verteileinrichtung durch den Absender mittels eines Sprachservers erfolgt, dass der Absender den Empfängerkreis festlegt durch Auswahl einer Empfängerliste oder Eingabe mittels Sprachbefehl,
**dass** der Absender die zu verteilende Audioinformation in analoger oder digitaler Form an die Speicher- und Verteileinrichtung übermittelt;
**dass** die Audioinformation, sofern diese bereits als digitales Signal mit beliebiger Codierung vom Absender an die Speicher- und Verteileinrichtung abgesandt wird, in die Codierung konvertiert wird, die von der Speicher- und Verteileinrichtung verwendet wird, dass die Speicher- und Verteileinrichtung die digitalisierte Audioinformation zwischenspeichert und die Empfänger über das Vorliegen einer Audioinformation benachrichtigt, und
**dass** die Audioinformation von der Speicher- und Verteileinrichtung an die Empfänger gesendet wird oder von den Empfängern dort abfragbar ist.

2. Verfahren nach Anspruch 1,
**dadurch gekennzeichnet,**
**dass** die Audioinformation durch sofortige Anwahl den Empfängern direkt zugestellt werden.

3. Verfahren nach Anspruch 1,
**dadurch gekennzeichnet,**
**dass** die Audioinformation, sofern diese als analoge Signale vom Absender an die Speicher- und Verteileinrichtung abgesandt wird, durch die Speicher- und Verteileinrichtung digitalisiert wird.

4. Verfahren nach Anspruch 1,
**dadurch gekennzeichnet,**
**dass** mehrere Empfänger in einem oder mehreren Verteilerverzeichnissen zusammengefaßt sind.

5. Verfahren nach Anspruch 1,
**dadurch gekennzeichnet,**
**dass** die Speicher- und Verteileinrichtung unter einem Menüpunkt einer Nachrichtenbox abrufbar ist.

6. Verfahren nach Anspruch 1,
**dadurch gekennzeichnet,**
**dass** der Empfänger der Audioinformation mittels einer optischen Anzeige auf seinem Endgerät über das Vorliegen einer Nachricht informiert wird.

7. Verfahren nach Anspruch 6,
**dadurch gekennzeichnet,**
**dass** die Anzeige als ein alphanumerischer Text auf einem Display erscheint.

8. Verfahren nach Anspruch 6,
**dadurch gekennzeichnet,**
**dass** ein Symbol auf dem Display erscheint.

9. Verfahren nach Anspruch 6,
**dadurch gekennzeichnet,**
**dass** ein Leuchtmittel das Vorliegen einer Audioinformation signalisiert.

10. Verfahren nach Anspruch 1,
**dadurch gekennzeichnet,**
**dass** dem Empfänger das Vorliegen einer Audioinformation durch eine Sprachansage statt dem Amtston beim Heranholen einer Amtsverbindung mitgeteilt wird.

11. Verfahren nach Anspruch 1,
**dadurch gekennzeichnet,**
**dass** die Speicher- und Verteileinrichtung einmalig oder in vorbestimmten Intervallen den Empfänger der Audioinformation anwählt.

12. Verfahren nach Anspruch 11,
**dadurch gekennzeichnet,**
**dass** der Absender der Audioinformation die Zeitdauer der Intervalle vorgibt.

13. Verfahren nach Anspruch 11,
**dadurch gekennzeichnet,**
**dass** der Empfänger vorab die Zeitdauer der Intervalle vorgibt.

14. Verfahren nach Anspruch 11,
**dadurch gekennzeichnet,**
**dass** die Benachrichtigung des Empfängers zeitversetzt erfolgt.

15. Verfahren nach Anspruch 14,
**dadurch gekennzeichnet,**
**dass** der Absender den Zeitpunkt der Benachrichtigung vorgibt.

## Revendications

1. Procédé de distribution simultanée d'une information audio quelconque sous forme de message d'un expéditeur à plusieurs destinataires définis, avec des terminaux analogiques à l'aide d'un dispositif de stockage et de distribution d'un système de distribution de messages, étant précisé que le dispositif de stockage et de distribution envoie l'information audio numérisée sous la forme d'un signal analogique, après une conversion numérique-analogique, aux destinataires quand ceux-ci sont prêts à recevoir,
**caractérisé en ce que** la commande du dispositif de stockage et de distribution par l'expéditeur se fait par serveur vocale,
**en ce que** l'expéditeur fixe le cercle de destinataires en sélectionnant une liste de destinataires ou en entrant une instruction vocale,
**en ce que** l'expéditeur transmet l'information audio à distribuer sous forme analogique ou numérique au dispositif de stockage et de distribution ;
**en ce que** l'information audio, dans la mesure où elle est déjà envoyée par l'expéditeur au dispositif de stockage et de distribution sous forme de signal numérique avec un codage quelconque, est convertie dans le codage qui est utilisé par le dispositif de stockage et de distribution, **en ce que** celui-ci stocke provisoirement l'information audio numérisée et avertit les destinataires de la présence d'une information audio, et
**en ce que** l'information audio est envoyée par le dispositif de stockage et de distribution aux destinataires ou peut être consultée à cet endroit par les destinataires.

2. Procédé selon la revendication 1, **caractérisé en ce que** l'information audio est délivrée aux destinataires directement, par sélection immédiate.

3. Procédé selon la revendication 1, **caractérisé en ce que** l'information audio, dans la mesure où elle est envoyée par l'expéditeur au dispositif de stockage et de distribution sous la forme de signaux analogiques, est numérisée par le dispositif de stockage et de distribution.

4. Procédé selon la revendication 1, **caractérisé en ce que** plusieurs destinataires sont réunis dans un ou plusieurs répertoires de distributeurs.

5. Procédé selon la revendication 1, **caractérisé en ce que** le distributeur de stockage et de distribution est apte à être consulté sous une option de menu d'une messagerie.

6. Procédé selon la revendication 1, **caractérisé en ce que** le destinataire de l'information audio est averti de la présence d'un message à l'aide d'un affichage optique sur son terminal.

7. Procédé selon la revendication 6, **caractérisé en ce que** l'affichage apparaît sur un écran sous la forme d'un texte alphanumérique.

8. Procédé selon la revendication 6, **caractérisé en ce qu'**un symbole apparaît sur l'écran.

9. Procédé selon la revendication 6, **caractérisé en ce qu'**un voyant lumineux signale la présence d'une information audio.

10. Procédé selon la revendication 1, **caractérisé en ce que** la présence d'une information audio est communiquée au destinataire grâce à un message vocal au lieu de la tonalité de numérotation lors de la prise de la ligne.

11. Procédé selon la revendication 1, **caractérisé en ce que** le dispositif de stockage et de distribution sélectionne le destinataire de l'information audio une seule fois ou à intervalles prédéfinis.

12. Procédé selon la revendication 11, **caractérisé en ce que** l'expéditeur de l'information audio prédéfinit la durée des intervalles.

13. Procédé selon la revendication 11, **caractérisé en ce que** le destinataire définit au préalable la durée des intervalles.

14. Procédé selon la revendication 11, **caractérisé en ce que** le destinataire est averti en différé.

15. Procédé selon la revendication 14, **caractérisé en ce que** l'expéditeur prédéfinit le moment de l'avertissement.

## Claims

1. Method for simultaneously distributing any audio information as a sender's message to a plurality of given recipients with analogue terminal devices by means of a storage and distribution device of a message distribution system, wherein the storage and distribution device sends the recipients the digitised audio information after digital-to-analogue conversion as an analogue signal when they are ready to receive, **characterised in that** control of the storage and distribution device is effected by the sender by a speech server,
**in that** the sender stipulates the circle of recipients by selection of a list of recipients or entry by speech command,
**in that** the sender transmits the audio information to be distributed in analogue or digital form to the storage and distribution device;
**in that** the audio information, if it is already sent as a digital signal with any code by the sender to the storage and distribution device, is converted to the code which is used by the storage and distribution device, **in that** the storage and distribution device temporarily stores the digitised audio information and notifies the recipients of the presence of audio information, and
**in that** the audio information is sent from the storage and distribution device to the recipients or can be retrieved there by the recipients.

2. Method according to claim 1,
**characterised in that**
the audio information is delivered to the recipients directly by immediate dialling.

3. Method according to claim 1,
**characterised in that**
the audio information, if it is sent as analogue signals by the sender to the storage and distribution device, is digitised by the storage and distribution device.

4. Method according to claim 1,
**characterised in that**
a plurality of recipients are compiled in one or more distributor directories.

5. Method according to claim 1,
**characterised in that**
the storage and distribution device can be called up under a menu item of a message box.

6. Method according to claim 1,
**characterised in that**
the recipient of the audio information is informed of the presence of a message by means of an optical indication on his terminal.

7. Method according to claim 6,
**characterised in that**
the indication appears as an alphanumerical text on a display.

8. Method according to claim 6,
**characterised in that**
a symbol appears on the display.

9. Method according to claim 6,
**characterised in that**
a lamp signals the presence of audio information.

10. Method according to claim 1,
**characterised in that**
the recipient is informed of the presence of audio information by a voice announcement instead of the dialling tone when obtaining an external connection.

11. Method according to claim 1,
**characterised in that**
the storage and distribution device dials the recipient of the audio information once only or at predetermined intervals.

12. Method according to claim 11,
**characterised in that**
the sender of the audio information predetermines the length of the intervals.

13. Method according to claim 11,
**characterised in that**
the sender predetermines the length of the intervals beforehand.

14. Method according to claim 11,
**characterised in that**
notification of the recipient is effected after a time lag.

15. Method according to claim 14,
**characterised in that**
the sender predetermines the time of notification.
